# FASCICULE DE BREVET EUROPEEN

(11) **EP 1 141 600 B1**
(45) Date de publication et mention de la délivrance du brevet: **03.03.2004**
(21) Numéro de dépôt: 99964732.4
(22) Date de dépôt: 29.12.1999
(51) Int. Cl.: F16K 17/04

(54) **CLAPET D'OBTURATION D'UNE ENCEINTE DE GAZ DE COMBUSTION**
ABSPERRVENTIL FÜR EINEN ABGASBEHÄLTER
CLOSURE VALVE FOR WASTE GAS CHAMBER

(30) Priorité: 30.12.1998 FR 9816642
(43) Date de publication de la demande: 10.10.2001
(73) Titulaire: ELECTRICITE DE FRANCE, 75008 Paris (FR)
(72) Inventeur: BLARY, Francis, F-75017 Paris (FR); BONFILS, Jacky, F-26170 Buis-Les-Baronnies (FR); DE ROCHEMONTEIX, Pierre, F-40110 Morcenx (FR)
(74) Mandataire: Martin, Jean-Jacques
(86) Numéro de dépôt international: PCT/FR1999/003308
(87) Numéro de publication internationale: WO 2000/040880

(56) Documents cités:
- EP-A- 0 005 101
- WO-A-97/33840
- DE-B- 1 095 075
- FR-A- 2 580 774
- US-A- 3 229 713

## Description

L'invention concerne les clapets de sécurité pour enceinte de combustion ou de post-combustion, notamment pour les installations de vitrification ou traitement thermique de déchets tels que les déchets amiantés.

On connaît un clapet de sécurité pour un orifice d'une enceinte de combustion, comprenant un obturateur monté pivotant par rapport à l'enceinte autour d'un axe contigu à l'orifice et parallèle au plan général de celui-ci. Le clapet comprend des moyens pour ouvrir et fermer l'orifice sur commande. Il comprend en outre un dispositif à contrepoids compensant le poids de l'obturateur et permettant son ouverture automatique lors d'une surpression de gaz dans l'enceinte. Toutefois, cet obturateur présente de nombreux inconvénients. Tout d'abord, en position ouverte, les différentes parties de l'obturateur ne sont pas soumises uniformément au flux de gaz sortant de sorte qu'en cas d'ouverture prolongée, elles se déforment différemment les unes des autres sous l'effet de la chaleur et ce de façon irréversible. Notamment, l'articulation est particulièrement fragilisée par les ouvertures prolongées. De plus, durant la manoeuvre d'ouverture, la section d'ouverture n'est pas uniforme et un grand débattement angulaire de l'obturateur est nécessaire pour libérer la totalité de la section d'écoulement des gaz. Ce grand débattement entraîne un déplacement brusque ou « effet missile » lors d'une ouverture inopinée par surpression, préjudiciable pour le clapet et l'enceinte. En outre, il est difficile de dissiper ou de récupérer en l'emmagasinant l'énergie cinétique produite par le déplacement de l'obturateur à l'ouverture.

Un clapet selon le préambule de la revendication 1 est connu de EP-A-0 005 101.

Un but de l'invention est de fournir un clapet remédiant à ces inconvénients.

En vue de la réalisation de ce but, on prévoit selon l'invention un clapet de sécurité pour une enceinte tel que défini par la revendication 1.

Ainsi, le coulissement de l'obturateur entraîne que ses différentes parties, ou au moins ses parties situées à une même distance d'un centre de l'obturateur, sont globalement soumises au même flux de gaz à l'ouverture. Dès lors, leur déformation est uniforme. Si elle est irréversible, elle ne menace donc pas la durée de vie de l'obturateur. De plus, les moyens reliant l'obturateur au châssis peuvent être placés hors d'une exposition directe au flux gazeux, ce qui les préserve. Par ailleurs, une importante section d'écoulement est obtenue dès l'amorce de l'ouverture. Le gaz en surpression est donc libéré très rapidement à l'ouverture. Il n'y a pas de risque « d'effet missile ». En outre, l'énergie cinétique produite par le coulissement peut être facilement dissipée ou récupérée.

Avantageusement, l'orifice a un axe vertical, le clapet comprenant un joint d'étanchéité fixé au châssis et apte à être en contact avec l'obturateur.

Ainsi, lorsque l'orifice est en partie supérieure de l'enceinte, à l'ouverture, le gaz s'échappe le long des bords de l'obturateur et non le long du joint. Le joint est également à l'abri des rayonnements de l'enceinte. Le joint est donc protégé et sa durée de vie est prolongée.

Avantageusement, le joint présente une forme annulaire et a un diamètre plus grand qu'un plus grand diamètre de l'orifice.

Ainsi, l'obturateur coulissant permet de disposer le joint à distance de l'orifice pour le protéger autant que possible du flux gazeux, et de lui donner une grande longueur pour mieux répartir la charge lors de la fermeture.

Avantageusement, le châssis comprend une cage apte à interdire tout déplacement, notamment éjection, de l'obturateur au-delà de la cage en direction opposée à l'orifice, le clapet étant agencé de sorte que l'obturateur est apte à occuper une position ouverte dans laquelle il est en butée contre la cage.

Ainsi, on améliore la sécurité de l'installation.

Avantageusement, les moyens d'actionnement comprennent au moins un ressort pour commander l'une parmi la fermeture et l'ouverture de l'obturateur, de préférence l'ouverture.

Avantageusement, les moyens d'actionnement comprennent un vérin pour commander l'une parmi la fermeture et l'ouverture de l'obturateur, de préférence la fermeture.

La commande préférée de l'ouverture par les ressorts donne au clapet une sécurité positive en ce sens qu'un défaut inopiné d'énergie pour commander le vérin n'interdit pas l'ouverture du clapet.

Avantageusement, les moyens de libération comprennent des moyens pour compenser en permanence le poids de l'obturateur au moins partiellement.

Avantageusement, les moyens de compensation comprennent au moins un ressort.

De tels moyens de compensation ont, par rapport à un système à contrepoids, l'avantage de ne pas trop augmenter l'inertie de l'ensemble, ce qui facilite l'ouverture rapide en cas de surpression.

Avantageusement, le clapet comprend des moyens de réglage du seuil de pression.

Ainsi, on peut adapter le clapet aux conditions de pression dans l'enceinte pour une meilleure sécurité.

On prévoit également selon l'invention une enceinte, notamment de combustion ou de post-combustion pour une installation de traitement de déchets solides amiantés, comprenant un clapet selon l'invention.

D'autres caractéristiques et avantages de l'invention apparaîtront encore dans la description suivante d'un mode préféré de réalisation donné à titre d'exemple non limitatif. Aux dessins annexés :

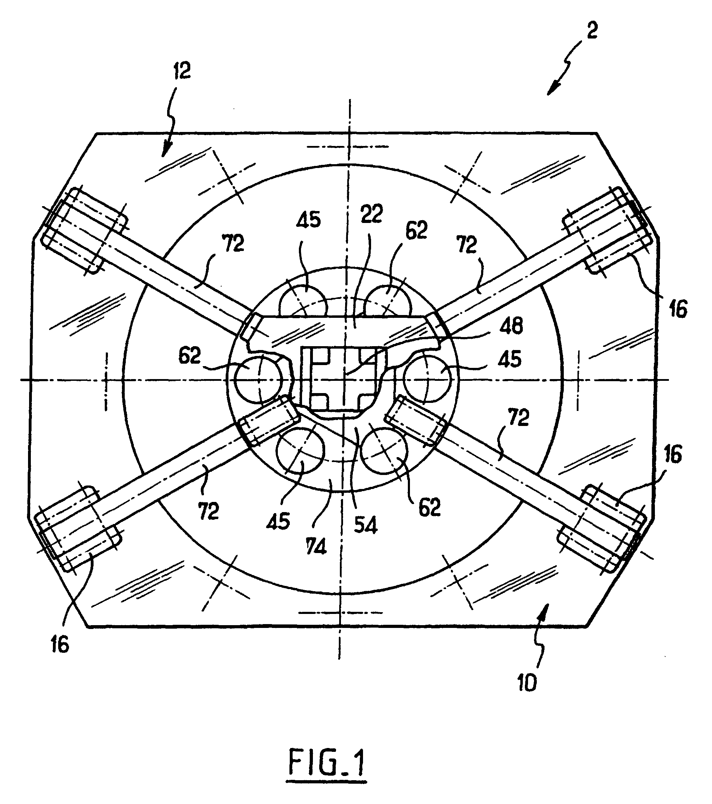

- la figure 1 est une vue de dessus du clapet avec arrachement ;
- la figure 2 est une vue en élévation du clapet en position fermée ;
- la figure 3 est une vue en coupe axiale du clapet en position fermée ;
- la figure 4 est une vue à plus grande échelle d'un détail de la figure 3;
- la figure 5 est une vue analogue à la figure 3 montrant le clapet en position d'ouverture commandée ;
- la figure 6 est une vue analogue à la figure 3 montrant le clapet en position d'ouverture par surpression ; et
- la figure 7 est un schéma cinématique du clapet.

Le clapet 2 qui va être décrit ci-après est, en l'espèce, associé à une enceinte 4 de combustion ou de post-combustion de gaz dans une installation de traitement thermique de déchets solides tels que des déchets amiantés à inerter. Le clapet est disposé à une extrémité supérieure d'une cheminée 6 de l'enceinte ayant une paroi cylindrique d'axe vertical 8 en matériau réfractaire.

Le clapet comporte un châssis 10. Le châssis comporte une plaque de base 12 horizontale fixée à la cheminée et perpendiculaire à l'axe 8, et une chape intermédiaire 14 parallèle à la plaque et fixée à celle-ci au moyen de quatre pieds inférieurs 16 s'étendant en périphérie d'un orifice 18 de la cheminée. Le châssis 10 comprend une chape supérieure horizontale 22 ou platine fixée à la chape intermédiaire 14 au moyen de quatre pieds supérieurs 24.

L'orifice 18 présente dans le prolongement de la face interne de la paroi 6 un épaulement formant une face plane horizontale annulaire 26 et une face 28 évasée vers l'extérieur et menant à la plaque de base 12.

Le clapet comporte un obturateur 30 comprenant un support supérieur 32, par exemple dans un acier référencé A42cp, ayant une paroi inférieure horizontale en forme de disque et une paroi latérale tronconique s'évasant vers l'extérieur et vers le haut à partir des bords de la paroi inférieure. L'obturateur 30 comporte une couche inférieure 34 en matériau isolant haute température tel que du kerlane. Cette couche 34 a en réduction la même forme que le support 32, cette forme étant pleine cette fois. La couche 34 est fixée à la face inférieure du support 32. Cette couche est entourée par une paroi en inox réfractaire. Lorsque l'obturateur 30 obture l'orifice 18, la couche isolante 34 s'étend en regard des faces 26 et 28 de l'orifice, à distance de celles-ci.

Un arbre 36 s'étend coaxialement à l'obturateur 30, à partir d'une face supérieure du support 32 en étant fixé à celui-ci. L'arbre 36 est cylindrique et creux. Il est reçu dans un conduit 38 de la chape intermédiaire 14 pour son guidage à coulissement par rapport au châssis 10 suivant l'axe 8.

L'obturateur comprend trois arbres d'équilibrage 40 d'axes verticaux parallèles à l'axe 8, fixés à la face supérieure de l'obturateur 30 par une liaison rotule 41. Les trois arbres 40 sont séparés de l'axe 8 par une même distance, et sont régulièrement répartis autour de celui-ci. Les trois arbres 40 sont mobiles à coulissement par rapport au châssis 10 en étant reçus dans des conduits d'équilibrage 42 de la chape intermédiaire 14. Une vis de réglage 44 est reçue coaxialement dans chaque arbre 40 et forme une liaison vis - écrou avec un filet interne de l'arbre. La vis 44 est fixée par sa tête supérieure à un capuchon 45 ayant une paroi horizontale supérieure et une paroi cylindrique inférieure dont une partie recouvre une face externe de l'arbre 40. A chaque arbre d'équilibrage 40 est associé un ressort d'équilibrage 46. Ce ressort de compression est en appui vers le bas sur la chape intermédiaire 14 et vers le haut contre la paroi supérieure du capuchon 45, dans celui-ci. Le ressort 46 entoure l'arbre 40 coaxialement à celui-ci.

Les trois ressorts d'équilibrage ont ici chacun une raideur de 0,4 daN/mm. Les ressorts sont prévus pour compenser à chaque instant au moins une partie du poids de l'obturateur 30. Idéalement, ils compensent exactement ce poids en annulant l'effet de la gravité sur l'obturateur 30, quelle que soit la position, ouverte ou fermée, de l'obturateur. En pratique, ils compensent ce poids à 1 ou 2% près. La vis de réglage 44 peut être ajustée pour pénétrer plus ou moins dans l'arbre 40, et ainsi régler les moyens d'équilibrage.

Le châssis comporte un actionneur tel qu'un vérin 48 d'axe 8 fixé à la chape supérieure 22 au-dessus de celle-ci. Ce vérin comprend un arbre de piston 50 traversant la chape supérieure 22 vers le bas et prolongé coaxialement par un arbre d'actionnement 52, ou arbre de guidage, dont une extrémité inférieure pénètre dans l'arbre 36. L'arbre de piston 50 et l'arbre d'actionnement 52 sont reliés l'un à l'autre par une liaison rotule. Deux collerettes planes horizontales annulaires 54 sont prévues, à distance l'une de l'autre, la plus haute des deux étant fixée rigidement à l'arbre d'actionnement 52. Elles sont en outre rigidement reliées l'une à l'autre par trois entretoises 56 réparties autour de l'axe 8. L'arbre 52 porte une collerette supérieure 66 rigidement fixée à la collerette supérieure 54. Les collerettes 54 ont en plan une forme de triangle équilatéral.

La chape intermédiaire 14 porte trois noyaux cylindriques verticaux 58 s'étendant en saillie d'une face supérieure de la chape, répartis régulièrement autour de l'axe 8 en alternance avec les arbres d'équilibrage 40 et s'étendant à une même distance de l'axe 8 que ceux-ci. Un ressort d'actionnement 60 est reçu extérieurement sur chaque noyau 58, coaxialement à celui-ci. Le ressort de compression 60 est en appui vers le bas sur la chape intermédiaire 14 et vers le haut contre une paroi supérieure d'un capuchon d'actionnement 62 à paroi cylindrique recouvrant extérieurement le ressort 60 et mobile à coulissement par rapport au noyau 58 parallèlement à l'axe 8. Chacun des trois capuchons d'actionnement 62 est rigidement fixé aux collerettes 54 et à l'une respective des entretoises 56.

L'arbre 36 traverse un orifice central de la collerette inférieure 54. Il porte lui-même une collerette 64 s'étendant entre les deux collerettes 54 et apte à venir prendre appui par le dessus sur la collerette inférieure 54.

La chape intermédiaire 14 porte sur une face inférieure des butées d'amortissement 65 en élastomère de forme conique fixées au droit des noyaux d'actionnement 58. Au droit de ceux-ci, l'obturateur 30 porte sur une face supérieure des plots cylindriques 68, par exemple en acier, apte à venir en appui contre les butées 65 en position ouverte de l'obturateur.

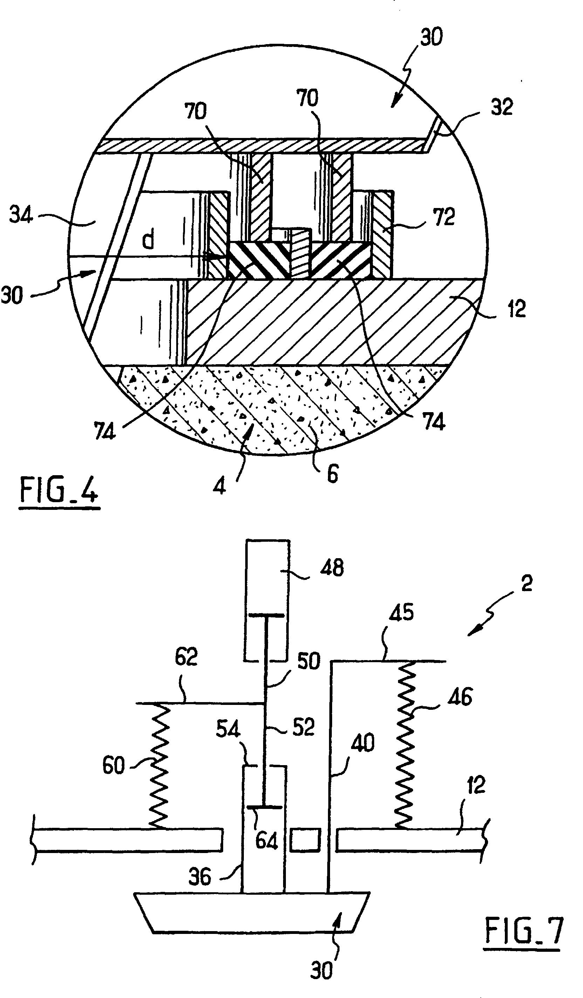

En référence notamment à la figure 4, l'obturateur 30 comporte deux parois cylindriques 70 centrées sur l'axe 8, de diamètres voisins mais différents l'un de l'autre, s'étendant vers le bas en saillie d'une face inférieure du support 32. La plaque de base comporte trois parois cylindriques 72 d'axe 8, de diamètres différents et voisins, et s'étendant vers le haut en saillie d'une face supérieure de la plaque 12. Deux cordons 74 de joint d'étanchéité haute température en tresse sont reçus entre les parois 72. Les parois 70 sont agencées de sorte qu'en position fermée de l'obturateur, les deux parois supérieures 70 viennent en appui par leur tranche contre les joints 74, les cinq parois 70, 72 étant alors en regard et à distance les unes des autres.

Le diamètre de la paroi 72 de plus petit diamètre et le plus petit diamètre d du joint 74 le plus interne sont plus grands que le plus grand diamètre de l'orifice 18, mesuré au niveau de la plaque 12. Ainsi, en position ouverte de l'obturateur 30, les gaz s'échappant de l'orifice 18 suivent le trajet indiqué par les flèches 76 sans se diriger de prime abord vers les joints 74. De plus, ces joints ne sont pas exposés directement aux rayonnements émanant de l'enceinte. Les parois 70 et 72 forment deux chicanes assurant avec les joints 74 une bonne étanchéité. Les joints 74 ont un très grand diamètre. La charge qu'ils supportent en position fermée est donc répartie sur une grande surface de joint, ce qui prolonge leur durée de vie.

On va maintenant décrire le fonctionnement du clapet. La cinématique des différentes pièces ressort plus clairement du schéma simplifié de la figure 7. Le clapet comporte en fait deux principaux ensembles mobiles chacun par rapport au châssis 10 et l'un par rapport à l'autre : l'obturateur 30 et les moyens d'équilibrage 40, 46 d'une part, le dispositif d'actionnement 50, 54, 56, 62 avec vérin 48 d'autre part.

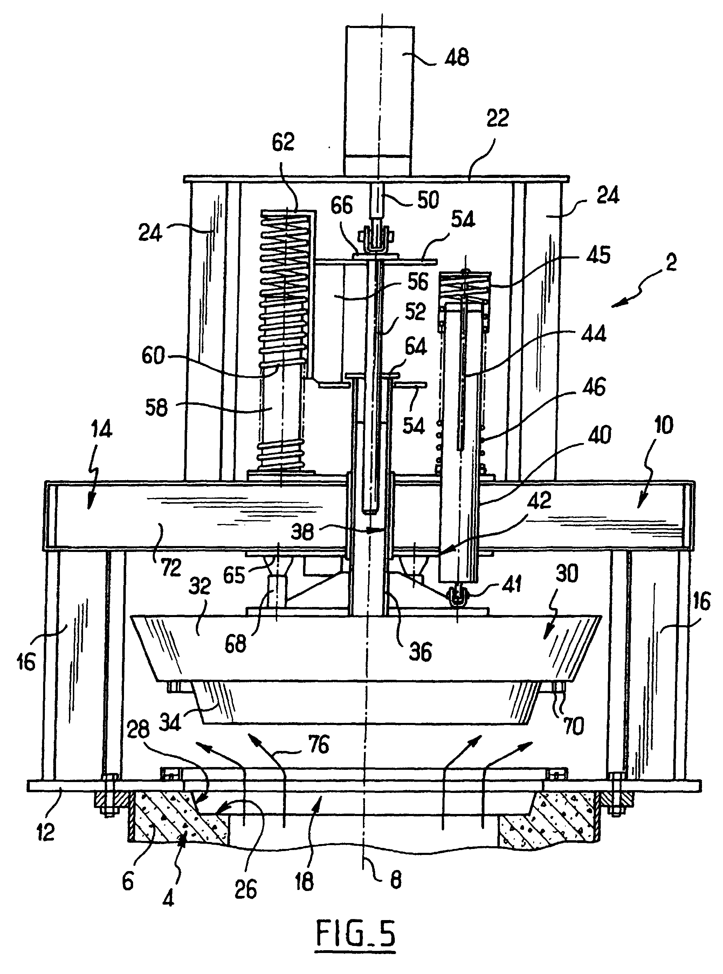

En référence à la figure 5, on a illustré la position d'ouverture commandée de l'obturateur. Ce dernier est en appui contre la chape intermédiaire 14. L'orifice 18 est dégagé pour la sortie des gaz. Le vérin 48, simple effet, est désactivé. L'obturateur est supporté par les ressorts d'équilibrage 46 comme c'est le cas en permanence. Ceux-ci ont leur longueur maximale. L'obturateur est levé par les ressorts d'actionnement 60 qui ont eux aussi leur longueur maximale. Capuchons d'actionnement 62 et arbre d'actionnement 52 sont en position haute. La collerette inférieure 64 repose sur la collerette d'actionnement inférieure 54 et est donc elle aussi en position haute, tout comme l'obturateur 30.

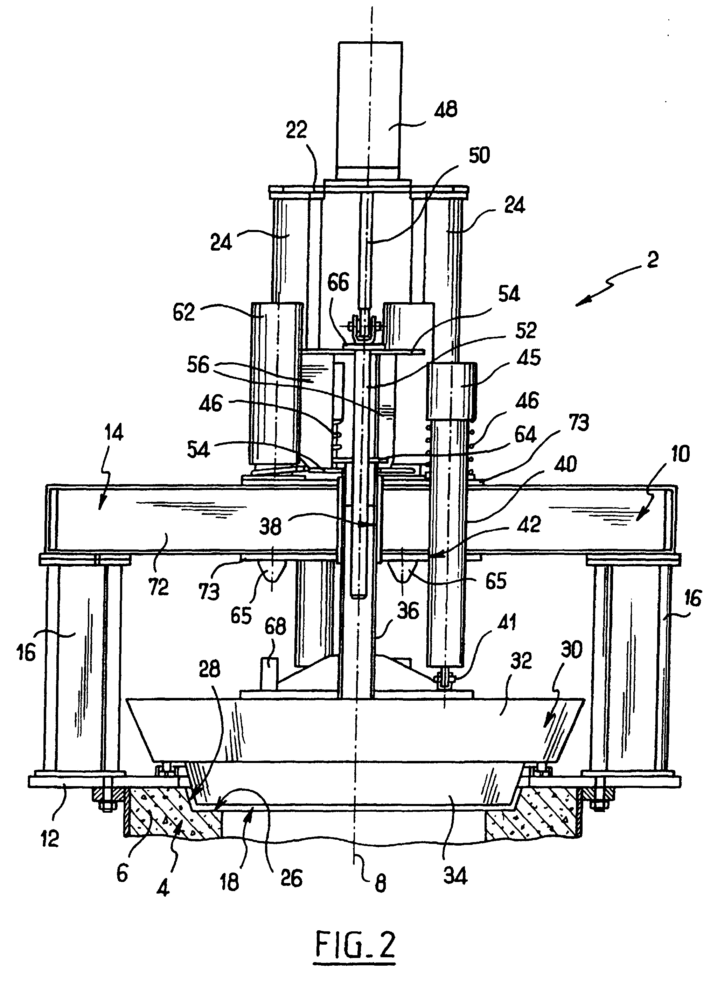

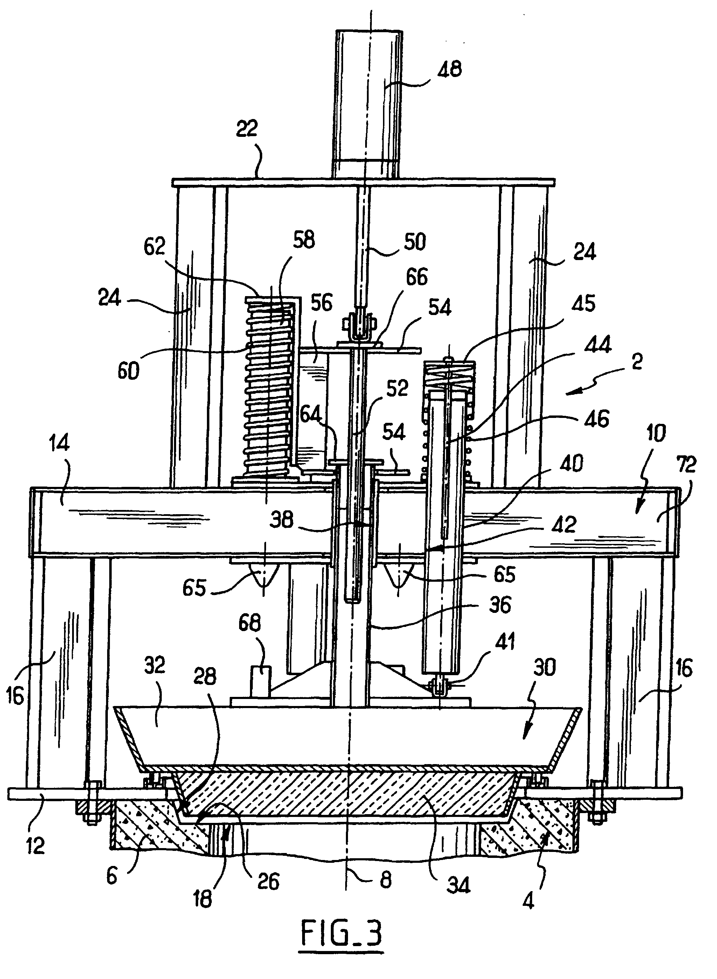

Pour passer de cette position ouverte commandée à la position fermée, on active le vérin 48. Il agit alors à l'encontre des ressorts d'actionnement 60 pour faire descendre l'obturateur en position fermée, lequel demeure supporté par les ressorts d'équilibrage 46. Le vérin 48 est dimensionné pour produire un effort légèrement supérieur en intensité à la résultante des efforts des trois ressorts d'actionnement 60. L'obturateur arrive alors dans la position des figures 2 et 3. Tous les ressorts 46, 60 ont cette fois leur longueur minimale. On maintient le vérin activé tant qu'on souhaite que l'orifice reste fermé. Pour ouvrir à nouveau l'orifice de façon commandée, il suffit de désactiver le vérin de sorte que l'obturateur remonte sous l'effet des ressorts d'actionnement 60.

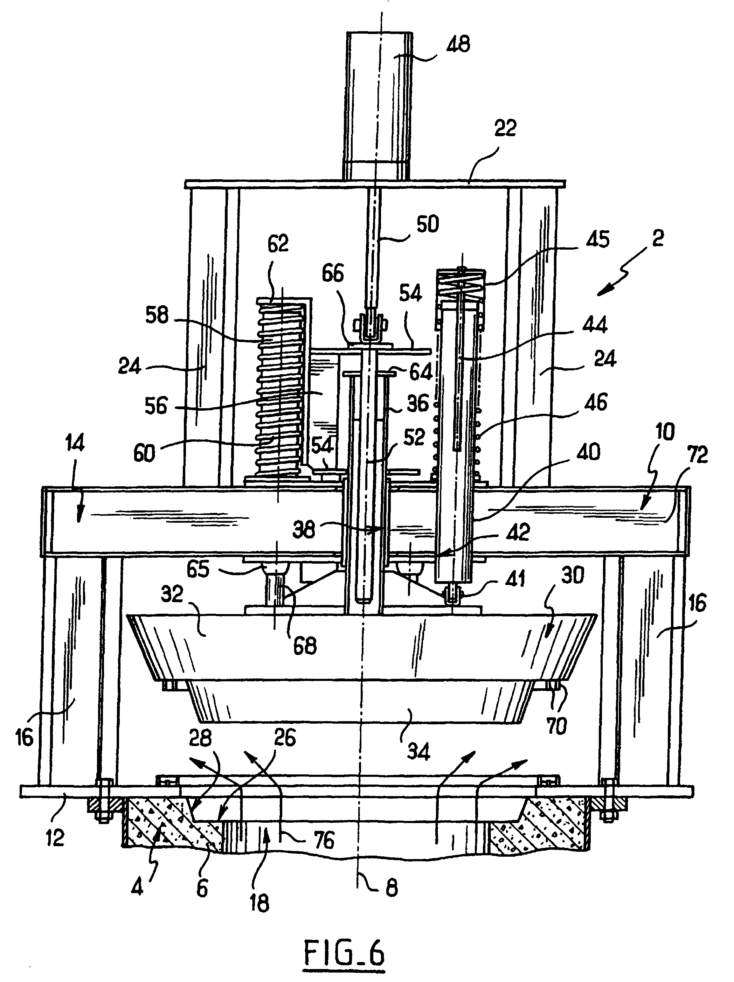

On peut régler les vis d'équilibrage 44 de sorte que les ressorts d'équilibrage 46 fournissent des efforts dont la résultante a une intensité très légèrement inférieure au poids de l'obturateur et des pièces qui en sont solidaires. Dans ces conditions, lorsqu'une surpression anormale apparaît dans l'enceinte, cette pression tend à forcer l'obturateur en position ouverte inopinée comme sur la figure 6. Sur celle-ci, l'obturateur porté par les ressorts d'équilibrage 46 est en position haute non commandée, les ressorts d'équilibrage ayant leur plus grande longueur. Le vérin 48 et les ressorts d'actionnement 60 sont toujours dans la position correspondant à l'obturateur fermé. La collerette 64 s'est déplacée de la collerette d'actionnement inférieure 54 en direction de la collerette d'actionnement supérieure 54. Lorsque la surpression cesse, l'obturateur redescend de lui-même en position fermée. Le réglage des vis d'équilibrage 44 permet de choisir à volonté le seuil de surpression produisant une ouverture automatique de l'obturateur. Le seuil de surpression peut être très bas.

Un faible déplacement de l'obturateur à partir de la position fermée permet d'obtenir une grande section d'écoulement pour l'échappement des gaz. La surpression sur obturateur cesse donc dès après l'ouverture. On remarque que le clapet est à sécurité positive dans la mesure où une absence d'énergie pour le clapet n'entrave pas sa sécurité, permise par les ressorts d'équilibrage 46 produisant une ouverture en cas de surpression.

La chape intermédiaire 14 est ici formée par quatre poutres radiales 72 en appui sur les pieds 16 respectifs et fixées à deux plaques circulaires centrales 73 supérieure et inférieure. Le châssis forme ainsi une cage interdisant toute éjection de l'obturateur au-delà de la cage. La cage peut être conçue pour s'étendre très près de l'orifice 18, grâce au mouvement de coulissement de l'obturateur 30.

On remarque que dans ce mode de réalisation, les moyens de libération à ressort d'équilibrage 40 sont distincts et indépendants des moyens d'actionnement à vérin 48 et ressort 60. De plus, ces deux ensembles de moyens sont chacun reliés en propre à l'obturateur en parallèle l'un de l'autre et non pas en série.

On pourra prévoir des moyens pour détecter que le seuil limite de suppression est atteint dans l'enceinte et pour désactiver le vérin 48, par fermeture de l'arrivée d'air de commande et mise à l'échappement du vérin.

L'enceinte pourra faire partie d'une installation de destruction de déchets tels que :
- l'amiante ;
- les déchets hospitaliers ;
- les boues de station d'épuration ;
- les boues industrielles ;
- les mâchefers ;
- les cendres volantes ;
- les résidus d'épuration de fumées d'incinération d'ordures ménagères ou refioms ;
- les scories ; et
- les déchets très faiblement radioactifs.

## Revendications

1. Clapet (2) de sécurité pour une enceinte (4), comprenant un châssis (10), un obturateur (30) monté coulissant par rapport au châssis (10), des moyens commandés d'actionnement (48, 60) de l'obturateur pour l'ouverture et la fermeture d'un orifice (18) de l'enceinte et, en outre, des moyens de libération (46) pour l'ouverture automatique de l'obturateur lorsqu'une pression dans l'enceinte atteint un seuil prédéterminé, **caractérisé en ce que** les moyens de libération (46) sont distincts des moyens d'actionnement (48, 60) et **en ce que** les moyens de libération (46) et les moyens d'actionnement (48, 60) sont reliés en propre à l'obturateur selon un montage en parallèle l'un de l'autre.

2. Clapet selon la revendication 1, **caractérisé en ce que** l'orifice (18) a un axe vertical (8), le clapet comprenant un joint d'étanchéité (74) fixé au châssis (10) et apte à être en contact avec l'obturateur (30).

3. Clapet selon la revendication 2, **caractérisé en ce que** le joint (74) présente une forme annulaire et a un diamètre (d) plus grand qu'un plus grand diamètre de l'orifice (18).

4. Clapet selon l'une quelconque des revendications 1 à 3, **caractérisé en ce que** le châssis (10) comprend une cage apte à interdire tout déplacement de l'obturateur (30) au-delà de la cage en direction opposée à l'orifice (18), le clapet étant agencé de sorte que l'obturateur (30) est apte à occuper une position ouverte dans laquelle il est en butée contre la cage.

5. Clapet selon l'une quelconque des revendications 1 à 4, **caractérisé en ce que** les moyens de libération (46) sont indépendants des moyens d'actionnement (48, 60).

6. Clapet selon l'une quelconque des revendications 1 à 5, **caractérisé en ce que** les moyens d'actionnement comprennent au moins un ressort (60) pour commander l'une parmi la fermeture et l'ouverture de l'obturateur (30), de préférence l'ouverture.

7. Clapet selon l'une quelconque des revendications 1 à 6, **caractérisé en ce que** les moyens d'actionnement comprennent un vérin (48) pour commander l'une parmi la fermeture et l'ouverture de l'obturateur (30), de préférence la fermeture.

8. Clapet selon la revendication 7, **caractérisé en ce que**, le vérin (48) étant apte à commander la fermeture, le clapet comporte des moyens pour désactiver le vérin lorsque la pression atteint le seuil prédéterminé.

9. Clapet selon l'une quelconque des revendications 1 à 8, **caractérisé en ce que** les moyens de libération comprennent des moyens (46) pour compenser en permanence le poids de l'obturateur (30) au moins partiellement.

10. Clapet selon la revendication 9, **caractérisé en ce que** les moyens de compensation comprennent au moins un ressort (46).

11. Clapet selon l'une quelconque des revendications 1 à 10, **caractérisé en ce qu'**il comprend des moyens (44) de réglage du seuil de pression.

12. Enceinte (4), notamment de combustion ou de post-combustion dans une installation de traitement de déchets amiantes, **caractérisée en ce qu'**elle comprend un clapet (2) selon l'une des revendications précédentes.

## Claims

1. A safety valve (2) for a chamber (4), the valve comprising a frame (10), a shutter (30) mounted to slide relative to the frame (10), controlled drive means (48, 60) to cause the shutter to open and close an orifice (18) of the chamber, and also release means (46) for causing the shutter to open automatically when pressure in the chamber reaches a predetermined threshold, the valve being **characterized in that** the release means (46) are distinct from the drive means (48, 60), and **in that** the release means (46) and the drive means (48, 60) are connected directly to the shutter in a configuration in which they are parallel with each other.

2. A valve according to claim 1, **characterized in that** the orifice (18) has a vertical axis (8), the valve including a sealing gasket (74) fixed to the frame (10) and suitable for coming into contact with the shutter (30).

3. A valve according to claim 2, **characterized in that** the gasket (74) is annular in shape and of a diameter (d) greater than the largest diameter of the orifice (18).

4. A valve according to any one of claims 1 to 3, **characterized in that** the frame (10) comprises a cage suitable for preventing any movement of the shutter (30) beyond the cage away from the orifice (18), the valve being arranged in such a manner that the shutter (30) is suitable for occupying an open position in which it comes into abutment against the cage.

5. A valve according to any one of claims 1 to 4, **characterized in that** the release means (46) are independent of the drive means (48, 60).

6. A valve according to any one of claims 1 to 5, **characterized in that** the drive means comprise at least one spring (60) for causing the shutter (30) to perform one action out of closing and opening, and preferably opening.

7. A valve according to any one of claims 1 to 6, **characterized in that** the drive means comprise an actuator (48) for causing the shutter (30) to perform one out of opening and closing, and preferably closing.

8. A valve according to claim 7, **characterized in that** the actuator (48) is suitable for causing the shutter to close, the valve including means for deactivating the actuator when the pressure reaches the predetermined threshold.

9. A valve according to any one of claims 1 to 8, **characterized in that** the release means comprise means (46) for permanently compensating the weight of the shutter (30), at least in part.

10. A valve according to claim 9, **characterized in that** the compensation means comprise at least one spring (46).

11. A valve according to any one of claims 1 to 10, **characterized in that** it comprises means (44) for adjusting the pressure threshold.

12. A chamber (4), in particular a combustion or post-position chamber in an installation for treating asbestos waste, the chamber being **characterized in that** it includes a valve (2) according to any preceding claim.

## Patentansprüche

1. Sicherheitsventil (2) für einen Behälter (4) mit einem Rahmen (10), einem Verschluss (30), der gegenüber dem Rahmen (10) verschiebbar montiert ist, Steuermitteln zur Betätigung (48, 60) des Verschlusses zum Öffnen und Schließen einer Öffnung (18) des Behälters und ferner mit Freigabemitteln (46) zum automatischen Öffnen des Verschlusses, wenn ein Druck im Behälter eine vorher bestimmte Schwelle erreicht, **dadurch gekennzeichnet, dass** sich die Freigabemittel (46) von den Betätigungsmitteln (48, 60) unterscheiden und die Freigabemittel (46) und die Betätigungsmittel (48, 60) mit dem Verschluss in einer Parallelanordnung verbunden sind.

2. Ventil nach Anspruch 1, **dadurch gekennzeichnet, dass** die Öffnung (18) eine vertikale Achse (8) besitzt, wobei das Ventil eine Dichtung (74) aufweist, die am Rahmen (10) befestigt ist und mit dem Verschluss (30) in Kontakt stehen kann.

3. Ventil nach Anspruch 2, **dadurch gekennzeichnet, dass** die Dichtung (74) ringförmig ist und einen größeren Durchmesser (d) als ein größter Durchmesser der Öffnung (18) aufweist.

4. Ventil nach einem der Ansprüche 1 bis 3, **dadurch gekennzeichnet, dass** der Rahmen (10) einen Käfig aufweist, der jede Verschiebung des Verschlusses (30) über den Käfig hinaus in der zur Öffnung (18) entgegengesetzten Richtung verhindern kann, wobei das Ventil derart angeordnet ist, dass der Verschluss (30) eine geöffnete Position einnehmen kann, in der er am Käfig anschlägt.

5. Ventil nach einem der Ansprüche 1 bis 4, **dadurch gekennzeichnet, dass** die Freigabemittel (46) unabhängig von den Betätigungsmitteln (48, 60) sind.

6. Ventil nach einem der Ansprüche 1 bis 5, **dadurch gekennzeichnet, dass** die Betätigungsmittel mindestens eine Feder (60) aufweisen, um das Schließen oder das Öffnen des Verschlusses (30) zu steuern, vorzugsweise das Öffnen.

7. Ventil nach einem der Ansprüche 1 bis 6, **dadurch gekennzeichnet, dass** die Betätigungsmittel einen Zylinder (48) aufweisen, um das Schließen oder das Öffnen des Verschlusses (30) zu steuern, vorzugsweise das Schließen.

8. Ventil nach Anspruch 7, **dadurch gekennzeichnet, dass** der Zylinder (48) das Schließen steuern kann und das Ventil Mittel aufweist, die den Zylinder deaktivieren, wenn der Druck die vorher bestimmte Schwelle erreicht.

9. Ventil nach einem der Ansprüche 1 bis 8, **dadurch gekennzeichnet, dass** die Freigabemittel Mittel (46) aufweisen, um das Gewicht des Verschlusses (30) permanent zumindest teilweise auszugleichen.

10. Ventil nach Anspruch 9, **dadurch gekennzeichnet, dass** die Ausgleichsmittel mindestens eine Feder (46) umfassen.

11. Ventil nach einem der Ansprüche 1 bis 10, **dadurch gekennzeichnet, dass** es Mittel (44) zum Einstellen der Druckschwelle aufweist.

12. Behälter (4), insbesondere zur Verbrennung oder Nachverbrennung in einer Anlage zur Behandlung von asbesthaltigem Müll, **dadurch gekennzeichnet, dass** er ein Ventil (2) nach einem der vorhergehenden Ansprüche aufweist.
